# EUROPÄISCHE PATENTANMELDUNG

(11) **EP 1 382 851 A1**
(43) Veröffentlichungstag der Anmeldung: **21.01.2004**
(21) Anmeldenummer: 02016070.1
(22) Anmeldetag: 19.07.2002
(51) Int. Cl.: F04B 53/16, F04B 53/14, F04B 53/18, F04B 39/04, F02G 1/044, F02G 1/053, F16J 15/00, F16J 15/16

(54) **Pumpe für Flüssigkeiten und Dichtungsanordnung mit Pumpe für eine zirkulierende Sperrflüssigkeit**

(71) Anmelder: CRENSO GmbH Creative Energy Solutions, 95189 Köditz (DE)
(72) Erfinder: Beichler, Germar, Dr., 95189 Köditz (DE)
(74) Vertreter: Schneider, Manfred, Dipl.-Ing.

(57) **Zusammenfassung**

Die Erfindung betrifft eine Pumpe für Flüssigkeiten mit einem entlang einer Führung eines Gehäuses beweglichem Kolben mit Führungsfläche (11), mit einer Zuführung (2) für die zu fördernde Flüssigkeit und mit einem Arbeitsraum (5), der mit einem Druckrohr (51) und einem Druckbegrenzungsventil (52) verbunden ist. Mit dem Ziel mehrstufige, mit Abdichtungsproblemen behaftete Pumpensysteme bei der Erzielung hoher Drücke zu vermeiden, wird die zu fördernde Flüssigkeit auf die Führungsfläche (11) eines Adhäsionskolbens (1) unter Ausbildung eines Flüssigkeitsfilmes (23) aufgebracht. Der Flüssigkeitsfilm (23) wird mittels der darin wirksamen Grenzflächenspannung unter einem Spaltbegrenzer (3) hindurch in den Arbeitsraum (5) der Pumpe gefördert. Am gegenüber liegenden Ende des Arbeitsraumes sorgt der Abstreifer (4) für das Lösen des Flüsigkeitsfilmes von der Führungsfläche (11) des Adhäsionskolbens (1). Die geförderte Flüssigkeit wird über eine Druckleitung (51) gefördert und der Druck durch ein Druckbegrenzungsventil (52) begrenzt.

## Beschreibung

Die Erfindung betrifft eine Dosierpumpe für Flüssigkeiten mit einem entlang einer geschlossenen Führungsfläche beweglichem Kolben, mit einer Zuführung für die zu fördernde Flüssigkeit, mit einer Druckkammer und mit einer der Druckkammer zugeordneten Druckleitung mit Druckbegrenzungsventilen.

Die Erfindung betrifft auch eine Dichtungsanordnung mit dichtendem Flüssigkeitsfilm, der zum Zweck der Kühlung und der Erhöhung des Dichtungsdruckes mittels Pumpe verdichtet und gefördert wird.

Eine Pumpe dieser Art ist im US 3,516,760 beschrieben. Dieses Dokument zeigt eine Hochdruckkolbenpumpe mit einem Plungerkolben. Der Plungerkolben verdrängt beim Eindringen seines Kopfes in einen Arbeitsraum die zu fördernde Flüssigkeit an einem Überdruckventil vorbei in die Druckleitung bzw. in eine Druckkammer. Beim Rückhub saugt der gleiche Kolben durch die Volumen- und damit Druckreduzierung in dem Arbeitsraum die Flüssigkeit aus einem Zuführrohr über ein weiteres Rückschlagventil.

Bedingt durch den insgesamt kleinen Arbeitsraum der Hochdruckkolbenpumpen und bedingt durch die konstruktiven Grenzen bei der Bestimmung des kleinsten Volumens des Arbeitsraumes, kann eine ausreichende Ansaugwirkung nur bei einem bestimmten Verhältnis zwischen dem erzielbaren Maximaldruck und dem Druck in der Ansaugleitung gewährleistet werden.

Dort, wo sehr hohe Drücke erforderlich sind, muss man eine mehrstufige Pumpenanordnung vorsehen. Das erfordert einen hohen konstruktiven Aufwand, der nicht nur durch die zusätzlichen Pumpen, sondern auch durch die erforderliche gegenseitige Synchronisation bestimmt wird. Für Anwendungsgebiete wie die Kraftstoff-Direkteinspritzung an Fahrzeugmotoren ist das regelmäßig bei einer nachgeordneten Druckerhöhungseinrichtung der Fall, wo die Synchronisation mit dem Einspritzzeitpunkt erhebliche Aufwendungen erfordert. (Vergleichen Sie hierzu u. a. DE 195 22 306 A1).

Neben diesen Aufwendungen für die mehrstufigen Pumpenanordnungen bereitet an diesen Kolbenpumpen die Abdichtung des Spaltes zwischen dem Schaft des Plungerkolbens und dem Gehäuse im Bereich zwischen dem hohen Druck im Arbeitsraum und dem niedrigen Druck der Atmosphäre - z. B. im Kurbelgehäuse - erhebliche Schwierigkeiten.

Wie im US 3,516,760 offenbart sind am Umfang des Plungerkolbens zwei Ringdichtungen mit Abstreiflippen im Abstand hintereinander angeordnet. Die Abstreiflippen beider Ringdichtungen weisen zum Arbeitsraum. Zwischen den beiden Ringdichtungen ist ein den Kolbenschaft umgreifender Ringraum vorgesehen, den eine Sperrflüssigkeit (blocking liquid) durchströmt, die regelmäßg zu kühlen ist. Zur Bewegung der Sperrflüssigkeit für diesen Zweck ist eine gesonderte Kolbenpumpe vorgesehen. Auch dadurch wird der Aufwand für die Pumpenanordnungen für hohe Drücke weiter erhöht.

Eine ähnliche Ausführung einer Kolbenpumpe dieser Art wird in der DE 91 07 284.0 U1 beschrieben. Auch hier sind dem Arbeitsraum steuerbare Ein- und Auslassventile zugeordnet. Der Schaft des Plungerkolbens gleitet in einer zylindrischen Führung. Im axialen Abstand sind ringförmige Lippendichtungen vorgesehen, deren Lippen mit ihren Spitzen zum Arbeitsraum mit dem höchsten Druck gerichtet sind. Zwischen diesen ringförmigen Lippendichtungen befindet sich ein erweiterter Ringspalt, in den ein Teil der zu fördernden Flüssigkeit als Sperrflüssigkeit geführt wird. Der Ringspalt ist für diesen Zweck mit der Saugleitung der Kolbenpumpe verbunden, die ein niedriges Druckniveau besitzt.

Im Dichtungsbereich ist die Sperrflüssigkeit druckarm und unbeweglich. Diese Ausführung hat die Nachteile, die bereits in Bezug auf die US 3 516 760 beschrieben wurden. Hinzu kommt, dass die Sperrflüssigkeit nicht gekühlt werden kann und keinem Kreislauf unterliegt. Die Arbeitsgeschwindigkeit muss aus diesem Grunde niedrig gehalten werden. Für Einsatzfälle, bei denen eine höhere Temperatur eine Rolle spielt, ist diese Pumpe nicht geeignet.

Eine weitere Anordnung dieser Art beschreibt die DE 298 22 614 U1. In diesem Dokument wird insbesondere der Kreislauf der Sperrflüssigkeit um den Schaft des Plungerkolbens beschrieben. Dieser Flüssigkeitskreislauf ist durch eine aufwändige hochwirksame Ringdichtung vom Arbeitsraum der Kolbenpumpe einerseits und vom Kurbelgehäuse andererseits abgeschirmt. Es wird eine absolute Trennung der Kühlflüssigkeit von dem zu fördernden gasförmigen Medium angestrebt.

Zu dem gleichen Zweck werden gemäß DE 23 55 191 A1 zwischen dem Arbeitsraum und dem Raum mit der Sperrfüssigkeit und/oder zu dem mit Oelnebel angereicherten Kurbelgehäuse einer Kurbel- oder Exzenterwelle paarweise angeordnete Membrandichtungen verwendet. Die elastischen Membrandichtungen sind einerseits mit dem Kolbenschaft form- und kraftschlüssig verbunden und andererseits im Abstand davon an den Wänden der Führung des Kreuzkopfes fixiert. Durch die ständige Formänderung der Membrankolben ist deren Lebensdauer begrenzt. Nachteilige Wirkungen treten auch in kleinen Räumen auf, die teilweise durch die bewegten Membranen verschlossen und somit einer ständigen zyklischen Volumen- und damit Druckänderung unterliegen. Es bauen sich konträre Drücke auf, die den Arbeitsprozess der Pumpe beeinträchtigen.

Auch diese Kolbenpumpe mit ihrer absoluten Dichtung ist nicht geeignet, einen stabilen, ausreichend hohen Druck in einem Arbeitsschritt zu erzeugen und/oder die Aufwändungen für die Dichtung zwischen Arbeitsraum und Atmosphäre zu reduzieren. Die Verwendung von Membrandichtungen verbietet zudem regelmäßig auch das Arbeiten mit oder bei hohen Temperaturen.

Zusammenfassend können wir feststellen, dass der Stand der Technik keine Kolbenpumpen offenbart, die geeignet sind, aus einem unter atmosphärischem Druck stehenden Behälter Füssigkeiten in einer einzigen Stufe in Druckleitungen oder Druckkammern mit hohem Druck zu fördern, wie es u. a. für das Speisen von Dichtungen mit Sperrflüssigkeiten oder das Speisen von Kraftstoffeinspritzsystemen (Common-Rail-Einspritzsysteme - DE 197 44 577 A1) aus Kraftstoff-Speichern erforderlich ist.

Die Aufgabe der vorliegenden Erfindung ist es, eine Pumpe für Flüssigkeiten vorzuschlagen, die geeignet ist, Flüssigkeiten aus Bereichen mit niedrigem, meist atmosphärischem Druck in einem einzigen Arbeitsschritt unter ausreichend hohem, begrenzbarem Druck - wie er z. B. bei der Bereitstellung von zirkulierenden Sperrflüssigkeiten, bei der Schmierung von Gleitlagern, bei der Kraftstoffeinspritzung an Kraftfahrzeugen und beim Einbringen von flüssigen Substanzen in unter Druck stehende Flüssigkeiten erforderlich ist (etwa zwischen 20 bar bis über 1.000 bar) - zu fördern. Der Arbeitsraum der Pumpe soll mit geringem Aufwand und zuverlässig gegen die Atmosphäre abdichtbar sein.

Diese Aufgabe wird auf überraschend einfache Weise durch die Merkmale des Anspruches 1 gelöst.
Mit dem Verzicht auf die Verdränger- und Saugwirkung eines changierenden, in einen Arbeitsraum tauchenden Kolbenkopfes vermeidet man die Notwendigkeit eines höheren Druckes in der Saugleitung. Eine Vor- und/oder Nachverdichtung, wie sie z. B. an Einspritzpumpen notwendig ist, ist nicht mehr erforderlich. Mit der Nutzung des Spaltes zwischen der Führungsfläche am Adhäsionskolben und dem führenden Lagergehäuse für die Förderung der Flüssigkeit vereinfachen sich die Abdichtungsprobleme. Die Sperrflüssigkeit im Spalt ist gleichzeitig die zu fördernde Flüssigkeit und wird über eben diesem Spalt aus einer Zone niedrigen Druckes in eine Zone höheren Druckes gefördert und innerhalb des Spaltes schließlich abgestriffen und in die Druckleitung überführt. Der Spalt zwischen der Führungsfläche des Adhäsionskolbens und dem führenden Lagergehäuse wird unmittelbar zum Arbeitsraum der Pumpe.

Mit der Nutzung der Grenzflächenspannung der Flüssigkeit zur Führungsfläche des Adhäsionskolbens werden die üblichen Ansaugprozesse überflüssig. Es ist im Bereich der Zuführung lediglich erforderlich, den Kontakt der Flüssigkeit mit der Führungsfläche des Adhäsionskolbens herzustellen. Die Förderung unter dem Spaltbegrenzer hindurch in die Druckkammer (Arbeitsraum) bis hin zu dem Abstreifer übernimmt die automatisch wirksame Grenzflächenspannung.

Den maximal erreichbaren Druck in der Druckkammer bestimmt die Leistungsfähigkeit der verwendeten Dichtungen oder Abstreifer. Dieser maximale Druck kann in Abhängigkeit von den Eigenschaften der zu fördernden Flüssigkeit weit über 1.000 bar betragen.

Das Fördern von üblichen Sperrflüssigkeiten ist damit ebenso möglich, wie z. B. das Fördern und Verdichten von Kraftstoffen in sog. Common-Rail-Einspritzsystemen.

Das Fördern selbst erfolgt weitgehend schwingungsarm und bei einigen Ausführungsvarianten der Pumpe sogar kontinuierlich. Die Fördergeschwindigkeit lässt sich mit der Steuerung oder Regelung der Drehzahl der Antriebe stufenlos verändern und exakt dem Bedarf anpassen. Insbesondere bei Kraftstoff-Einspritzsystemen ist diese Eigenschaft von besonderem Vorteil hinsichtlich der Reduzierung des Kraftstoffverbrauches und der Verringerung der Umweltverschmutzung durch Verbrennungsgase.

Die erreichbaren Parameter der Pumpe sind auch für Misch- und Dosierungsvorgänge in der chemischen Industrie oder bei der Wasseraufbereitung geeignet wo oft sehr genau definierte und kleine Dosiermengen unter hohem Druck in einen Prozess eingebracht werden müssen.

Für die Definition des Schutzbereiches ist die inhaltliche Erklärung des Begriffes "Adhäsionskolben" von besonderer Bedeutung.
Im Zusammenhang mit dieser Erfindung ist ein Adhäsionskolben ein Körper, der mit mindestens einer seiner in Bewegungsrichtung ausgerichteten Führungsflächen an einer parallel dazu ausgerichteten Fläche abweichender Geschwindigkeit, bei an die Erfordernisse anpassbarer, gegenseitiger Abdichtung des Führungsspaltes, gleiten kann. Neben den dargestellten Beispielen kann z. B. auch die Innenfläche eines Zylinders die Funktion eines Adhäsionskolbens erfüllen.
Der Begriff Adhäsionskolben definiert die erfindungsgemäße Sonderform eines üblichen Kolbens.

Die Gestaltung der Zuführung der zu fördernden Flüssigkeit nach Anspruch 2 bietet sich insbesondere dort an, wo die zu fördernde Flüssigkeit auch als Oelnebel (Oel in mehr oder weniger dichten Konzentration in einem Gas), der sich meist permanent ausbildet, verfügbar ist und die entsprechende Flüssigkeit für Schmier-, Sperr- und/oder Kühlvorgänge geeignet ist. Das ist in Kurbelgehäusen oder Getriebekästen regelmäßig der Fall.

Die Ausführung nach Anspruch 3 wird man immer dort bevorzugen, wo ein Oelnebel oder dgl. zu vermeiden ist, wo nur ein begrenzter Raum für die Ausbildung eins Flüssigkeitsfilmes zur Verfügung steht oder wenn die Pumpe am Grund eines Flüssigkeitsbehälters angeordnet ist.

Die Gestaltung der Pumpe nach Anspruch 4 hat den Vorteil der einfachsten Gestaltung der Spaltbegrenzer, des Arbeitsraumes und der Abstreifelemente. Als Spaltbegrenzer und Abstreifelemente können standardisierte ringförmige Dichtungselemente Anwendung finden. Die ringförmige Anordnung aller Arbeitselemente um den Kolben oder die Führung erübrigt die u. U. komplizierte seitliche Abgrenzung des Arbeitsraumes.

Die Verwendung einer changierenden Hubbewegung nach Anspruch 5 erlaubt die Verwendung von herkömmlichen, verfügbaren, ringförmigen Dichtungselementen, die in einer Bewegungsrichtung als Abstreifer und in der anderen Bewegungsrichtung als Spaltbegrenzer wirksam sein können. Zu beachten ist bei dieser Ausführung, dass die Größe der Changierbewegung ein bestimmtes Mindestmaß haben muss. Es ist erforderlich, dass der in den Bereichen der Zuführung ausgebildete Flüssigkeitsfilm unter dem Spaltbegrenzer hinweg mindestens bis in den Arbeitsraum bewegt wird. Je größer der Hub und je größer die Kolbengeschwindigkeit sind umso größer wird regelmäßig die Förderleistung.

Mit der Ausführung nach Anspruch 6 kann die Förderleistung einer Pumpe erhöht werden. Z. B. bei der Anwendung der Pumpe als Stangendichtung zwischen zwei Räumen wird bei jedem Hub - unabhängig von seiner Bewegungsrichtung - Flüssigkeit aus beiden Räumen in den Arbeitsraum gefördert.

Die Ausführung nach Anspruch 7 gestattet es, Adhäsionskolben zu verwenden, die sich ausschließlich in eine Richtung bewegen. Auf der ausgewählten Führungsfläche des Kolbenrades werden in Bewegungsrichtung hintereinander die Flüssigkeitszuführung, der Spaltbegrenzer, die Druckkammer und der Abstreifer angeordnet. Bei dieser Ausführung sind jedoch seitliche Abstreifer oder Dichtelemente unvermeidbar. Der Vorteil dieser Ausführungen ist - neben der meist einfachen Zuführung des Flüssigkeitsfilmes und dem ausschließlich durch Druckbegrenzungsventile begrenzten Druck in der Druckleitung - die verhältnismäßig hohe Förderleistung.

Die Ansprüche 8 bis 10 definieren vorteilhafte Gestaltungselemente dieser Pumpe nach Anspruch 7.

Der Anspruch 11 definiert eine Pumpe der erfindungsgemäßen Art, die mit ihren Bestandteilen gleichzeitig die Dichtfunktionen an der Führungsfläche des Kolbens und die Förderfunktionen der Pumpe miteinander kombinieren kann. Dichtungen dieser Art sind sowohl an herkömmlichen Kolbenpumpen oder Verdichtern als auch an Bauelementen einsetzbar, die Bewegungen z. B. aus einem Kurbelgehäuse in den Zylinder einer Arbeitsmaschine oder in umgekehrter Richtung übertragen. Ihr Einsatz ist u. a. auch zwischen Kolben und Zylinderwand von Hochleistungsvakuumpumpen denkbar.

Von besonderer Bedeutung ist bei dieser Ausführung, dass die Sperrflüssigkeit aus dem im Kurbelgehäuse befindlichen Oelnebel oder dem dort aufspritzenden Öl gespeist werden kann. Dabei vereinigen sich die unvermeidbar in den Zylinder der Arbeitsmaschine gelangenden, feinsten Flüssigkeitsfilme an der Kolbenstange im Arbeitsraum des Zylinders nicht zu einer größeren Ansammlung von Oel. Sie führen schließlich zu keiner Havarie. Kleinste Ansammlungen eines evtl. vorhandenen Oelüberschusses in dem Zylinder werden sofort und automatisch wieder in den Arbeitsraum der Pumpe befördert.
Die Ausführung nach Anspruch 12 ist dann sinnvoll, wenn in den voneinander getrennten Räumen unterschiedliche, nicht mischbare oder schwer wieder trennbare Flüssigkeiten vorhanden sind.

Der unabhängige Anspruch 13 beschreibt eine Anordnung, bei der die Dichtungsfunktion überwiegt. Die Pumpe ist Bestandteil der Dichtung und dient zur Aufrechterhaltung eines bestimmten Druckes der Sperrflüssigkeit und für die Aufrechterhaltung eines Flüssigkeitskreislaufes zum Zwecke der Kühlung.

Der Anspruch 14 definiert eine besondere Ausführungsform der genannten Dichtungsanordnungen.

Anspruch 15 zeigt einen wichtigen Einsatz der Pumpe und der Dichtungsanordnung in kombinierter Form gemäß Anspruch 13 an einer Heißgasmaschine auf.

Die Erfindung soll nachstehend an Ausführungsbeispielen näher erläutert werden. In den dazu gehörigen Zeichnungen zeigen:
- Fig. 1: eine Querschnittsdarstellung der Grundbausteine der erfindungsgemäßen Pumpe,
- Fig. 2: eine vereinfachte Draufsicht zu Fig. 1,
- Fig. 3: eine schematische Darstellung einer Heißgasmaschine mit Dichtungsanordnungen im Zylinderboden der Arbeitszylinder,
- Fig. 4: eine Dichtungsanordnung des Zylinderbodens eines Zylinders der Heißgasmaschine gemäß Fig. 3 in einer Schnittdarstellung,
- Fig. 5: das Schema einer Pumpe mit changierendem Adhäsionskolben und Flüssigkeitszuführungen beiderseits der Pumpe,
- Fig. 6: eine vereinfachte Draufsicht auf eine erfindungsgemäße Pumpe mit einem kontinuierlich bewegten Adhäsionskolben,
- Fig. 7: einen radförmig ausgebildeten umlaufenden Adhäsionskolben mit einer Pumpe nach Fig. 6 und
- Fig. 8: einen Querschnitt durch die Pumpe und den rotierenden Adhäsionskolben gemäß Fig. 7 entlang der Linie VIII - VIII.

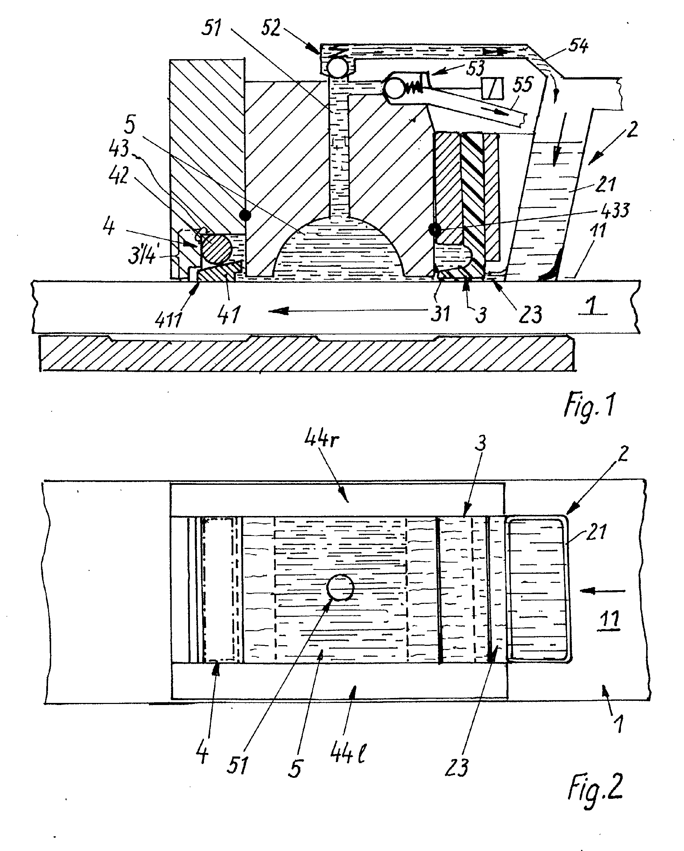

Das Grundprinzip der vorliegenden Pumpe soll zunächst schematisch anhand eines Adhäsionskolbens 1 beschrieben werden, der sich in einer Ebene kontinuierlich in eine Richtung bewegt (Fig. 1). Dieser Adhäsionskolben 1 kann z. B. die Stirnseite einer radförmigen, rotierenden Scheibe sein.

Auf die in Pfeilrichtung bewegliche Führungsfläche 11 des Adhäsionskolbens 1 wird an der rechten Seite ein Flüssigkeitsfilm 23 aufgetragen. Hierzu dient eine Zuführung 2 in Form eines Schachtes 21, der aus einem Speicher nachgefüllt wird. Der Adhäsionskolben 1 und die Pumpe kann auch direkt in einem Flüssigkeitsspeicher angeordnet sein. An der Führungsfläche 11 des Adhäsionskolbens 1 bildet sich der Flüssigkeitsfilm 23 aus.

Der Spaltbegrenzer 3, der eine elastisch anliegende Lippe 31 hat, breitet den Flüssigkeitsfilm 23 seitlich aus und begrenzt ihn hinsichtlich seiner Dicke. Dieser Spaltbegrenzer 3 hat gleichzeitig die Aufgabe zu verhindern, dass der Flüssigkeitsfilm 23 Gasblasen oder dgl. mitführt. Mit der Begrenzung der Dicke verhindert der Spaltbegrenzer 3 auch, dass unter Wirkung des Druckes in dem Arbeitsraum 5 der Flüssigkeitsfilm 23 gegen die Bewegungsrichtung des Adhäsionskolbens 1 bewegt wird. Die Dicke des Flüssigkeitsfilmes 23, die dann durch den Spaltbegrenzer 3 definiert wird, beträgt meist nur wenige zehntel Millimeter oder gar nur Bruchteile davon.

Der durch den Spaltbegrenzer 3 begrenzte Flüssigkeitsfilm 23 wird unter Wirkung der sog. Grenzschichtspannung in die Druckkammer 5 geführt und Bestandteil der dort zwischenzeitlich unter höherem Druck gespeicherten Flüssigkeit.

Am entgegen gesetzten Ende des Arbeitsraumes 5 befindet sich ein Abstreifer 4. Dieser Abstreifer 4 besteht aus einem kegeligen oder keilförmigen Dichtring 41 (oder Dichtstab), der mit seiner unteren Fläche auf der Führungsfläche 11 des Adhäsionskolbens 1 gleitet. Durch die Druckverhältnisse in dem Arbeitsraum 5 wird der Dichtring 41 mit seiner Spitze 411 voraus in Bewegungsrichtung des Adhäsionskolbens 1 belastet. Der im Stützwinkel 43 des Trägers 431 geführte Belastungsring 42 aus vorzugsweise elastischem Werkstoff presst den Dichtring 41 derart auf die Führungsfläche 11 des Adhäsionskolbens 1, dass ein Flüssigkeitsfilm vollständig von der Oberfläche des Adhäsionskolbens 1 abgestriffen und abgelöst wird und sich die abgestriffene Flüssigkeit in dem Arbeitsraum 5 sammelt.

In dem Arbeitsraum 5 erhöht sich bei der permanenten Bewegung des Adhäsionskolbens 1 der Druck, bis dieser durch die Bemessung oder Einstellung des Druckbegrenzungsventiles 52 in der Druckleitung 51 begrenzt wird. Überschüssige Füssigkeit gelangt über den Rücklauf in den Speicher 21, 22 für die Zuführung 2 zurück. Aus dem Druckrohr 51 kann die unter Druck stehende Flüssigkeit über ein steuerbares Verbraucherventil 53 über eine Verbraucherleitung 55 einem Verbraucher zugeführt werden.

Wird ein Ahäsionskolben 1 nur in einer Richtung bewegt, dann ist es regelmäßig notwendig, parallel zur Bewegungsrichtung ausgerichtete Seitendichtungen 44re, 44 li beiderseits des Spaltbegrenzers 3, des Arbeitsraumes 5 und des Abstreifers 4 vorzusehen (Fig 2).

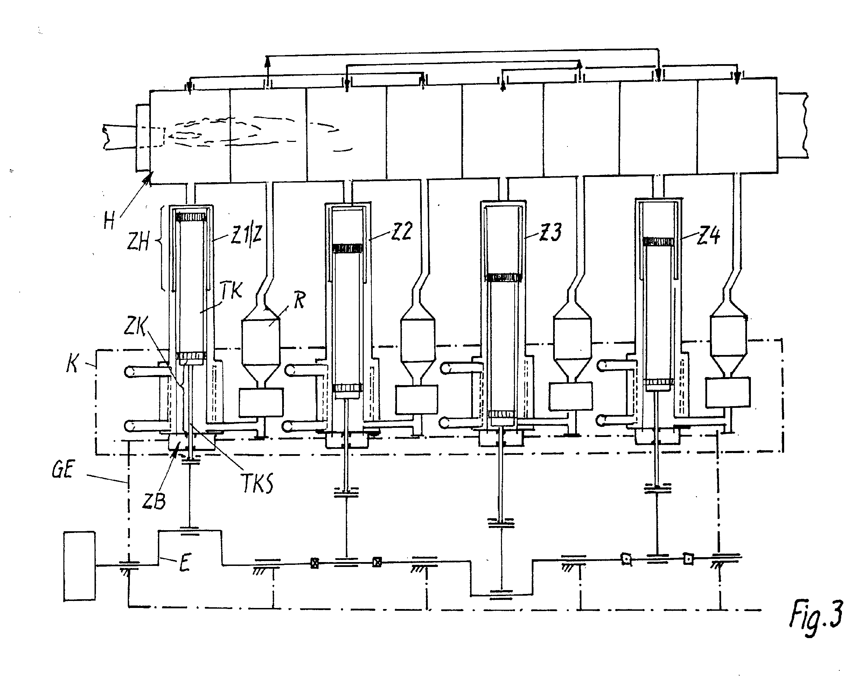

Ein Beispiel für die Anwendung der Erfindung ist in Fig. 3 dargestellt. Diese Fig. 3 zeigt eine Heißgasmaschine mit vier Arbeitszylindern Z; Z1, Z2, Z3, Z4. Dem heißen Zylinderabschnitt ZH der Arbeitszylinder Z ist eine Heizanordnung H und dem kalten Zylinderabschnitt ZK der Arbeitszylinder Z ein Kühler K zugeordnet. Über ein entsprechendes Rohrleitungssystem, entsprechende Ventile und Regeneratoren R ist der kalte Zylinderraum ZK z. B. des Arbeitszylinders Z1 mit dem Wärmetauscher des Heizers und über diesen mit dem heißen Zylinderabschnitt ZH des Arbeitszylinders Z4 verbunden. Die Arbeitszylinder Z dieser vierzylindrigen Heißgasmaschine arbeiten um jeweils 90° gegeneinander versetzt und sind über die genannte Regeneratorleitung mit dem Arbeitszylinder des jeweils vorlaufenden Tauchkolbens TK verbunden.

Der Tauchkolben TK jeder Zylinderanordnung wird in seinem heißen Bereich in einer Keramikführung des Arbeitszylinders Z mit einem schmalen keramischen Kolbenring formschlüssig geführt. Im kalten Zylinderabschnitt ZK des Arbeitszylinders Z wird der Tauchkolben mit wesentlich größerem Spiel an der Zylinderwand geführt. Die starr mit dem Tauchkolben TK verbundene Kolbenstange TKS ist im Zylinderboden ZB dichtend und zentrierend geführt. An ihrer Unterseite ist diese Kolbenstange TKS in dem Kurbelgehäuse GE über ein Pleuel mit der Kurbelwelle E verbunden.

Bei der Arbeitsweise als Heißgasmotor wird die Kurbelwelle E über das Pleuel angetrieben und kann z. B. einen Generator treiben. In der Arbeitsweise als Kältemaschine wird die Kurbelwelle E mittels Motor angetrieben und setzt den Kühlprozess in Gang.

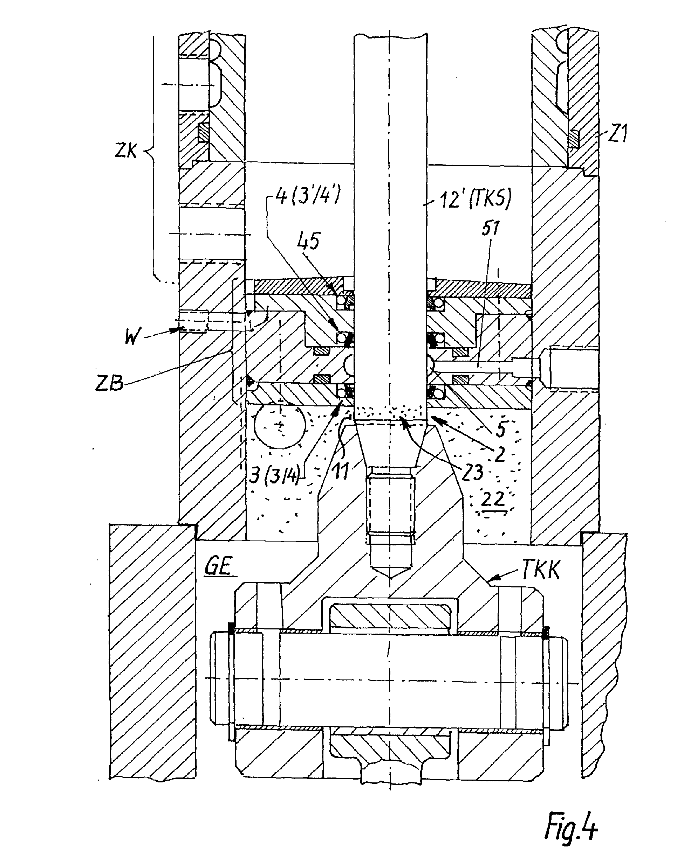

Die Dichtungsanordnung im Zylinderboden ZB ist in Fig. 4 vergrößert dargestellt. Die auf und ab bewegbare Kolbenstange TKS, die hier ais Adhäsionskolben 12' wirkt, ist am unteren Ende mit einem sog. Kreuzkopf TKK verbunden, an dem das Pleuel angelenkt ist. Die Kolbenstange TKS führt eine lineare, vertikale Bewegung in wechselnden Richtungen aus. Die Größe des Hubes entspricht etwa einer halben Kolbenlänge. Der Kreuzkopf TKK befindet sich im Kurbelgehäuse GE und ist einem sich ständig regenerierenden Oelnebel 22 ausgesetzt. Dieser Oelnebel 22 bildet regelmäßig an dem unteren Teil der Kolbenstange TKS, 12' einen Flüssigkeitsfilm 23 oder Oelfilm aus.

Im unteren Teil des Zylinderbodens ZB ist als Spaltbegrenzer 3 ein ringförmiges Dichtungselement 3/4, bestehend aus einem Dichtring 41, einem Belastungsring 42 und einem Stützwinkel 43 eingesetzt, das die Kolbenstange 12' /TKS formschlüssig umgreift. Ein ähnlich wirkendes Dichtungselement ist u. a. in der DE 32 25 906 C2 beschrieben.

Die Spitze 411 des Dichtringes 41 weist zum Kurbelgehäuse GE. Der Belastungsring 42 drückt beim Aufwärtshub der Kolbenstange 12 auf den Bereich der Spitze des Dichtringes 41. Der Dichtring 41 liegt unbelastet auf der Führungsfläche 11 der Kolbenstange TKS auf. Der entlastete Dichtring 41 dient in diesem Fall als Spaltbegrenzer 3. Die Reibung des sich an der Kolbenstange 12 ausbildenden Flüssigkeitsfilmes 23 an dem Dichtring 41 bewegt diesen aus dem keilförmigen Spalt zwischen dem Belastungsring 42 und der Kolbenstange 12 heraus. Auf diese Weise gibt der Dichtring 41 für einen Teil des Flüssigkeitsfilmes 23 den Weg zum Arbeitsraum 5 frei. Die hier wirksame Grenzflächenspannung, die unter dem Einfluss der Adhäsionskräfte entsteht, fördert den Flüssigkeitsfilm 23 in den Arbeitsraum 5.

Oberhalb des Arbeitsraumes 5 befindet sich ein zweites Dichtungselement 3'/4' das die Aufgabe des Abstreifers 4 erfüllt. Der Aufbau der Dichtungsanordnung 3'/4' ist prinzipiell identisch mit demjenigen Dichtungselement 3/4, das als Spaltbegrenzer 3 fungiert. Die Spitze des im Querschnitt keilförmigen Dichtungsringes 3'/4' ist jedoch vom Arbeitsraum 5 weg, nach oben gerichtet. Bei der Aufwärtsbewegung der Kolbenstange 12 erhöht sich die Belastung des Dichtringes 41 gegen die Führungsfläche des Adhäsionskolbens 12. Der Dichtring 41 streift den sich dort ausbildenden Flüssigkeitsfilm von der Führungsfläche 11 der Kolbenstange 12 ab. Die oberhalb folgende, zusätzliche Ringdichtung 45 soll evtl. verbleibende Flüssigkeitselemente an der Oberfläche sicherheitshalber vom kalten Zylinderabschnitt ZK fern halten. Zwingend notwendig ist die Ringdichtung 45 nicht.

Sollten Reste des Flüssigkeitsfilmes auf der Kolbenstange 12 in feinster Form bis in den kalten Zylinderraum ZK verbleibenund nach mehreren Hüben sammeln, dann werden diese bei Überschreitung einer Mindestmenge in einer der nächsten Abwärtsbewegungen der Kolbenstange TKS durch die sich öffnende Dichtungsanordnung 45, die in dieser Richtung als Spaltbegrenzer wirkt, nach unten geschoben. Auch das Dichtungselement 3'/4' wirkt bei der geänderten Hubrichtung als Spaltbegrenzer 3 und fördert diesen übeschüssigen verbliebenen Oelfilm automatisch wieder in den Arbeitsraum 5.

Auf diese Weise ist der kalte Zylinderabschnitt ZK trotz einer regelmäßigen Schmierung an allen Dichtelementen von störenden Oelresten absolut befreit. Es kann sich im kalten Zylinderabschnitt keine störende Oelmenge ansammeln, die den Arbeitsprozess der Heißgasmaschine stört oder dort gar zur Havarie führen kann.

Das sich im kalten Zylinderabschnitt ZK im Bereich der Zylinderinnenwände bildende Kondenswasser wird in regelmäßigen Abständen über einen entsprechenden Kondenswasserablass W - getrennt vom Oel - abgesaugt.

Der Arbeitsraum 5 bzw. die Druckleitung 51 ist - wie in Fig. 1 gezeigt - auch in diesem Fall mit einem Druckbegrenzungsventil 52 (nicht dargestellt) versehen. D. h. sobald der Druck eine bestimmte Größe überschreitet, wird Flüssigkeit - hier ist es Oel - über eine Rückführleitung drucklos in das Kurbelgehäuse GE zurück geführt.

Das Oel im Arbeitsraum 5 wirkt an der Kolbenoberfläche 12 als zusätzliche Dichtung nämlich als Sperrfüssigkeit. Sie unterstützt den Dichtvorgang durch die Ringdichtungen 3/4, 3'/4' und verhindert bei einem Druck, der größer ist als der Druck im kalten Zylinderabschnitt, zuverlässig das Entweichen von Gas aus dem kalten Zylinderabschnitt ZK. Im kalten Zylinderabschnitt haben wir z. B. einem Druck von etwa 65 bar. Im Kurbelgehäuse GE dagegen überwiegt atmosphärischer Druck.

Der Druck im Arbeitsraum 5 bleibt in Abhängigkeit von der Funktion oder der Einstellung des Druckbegrenzungsventiles 52 stets gleich und wird nach jedem Verbrauch von Druckflüssigkeit sofort wieder automatisch aufgefüllt. Dieser Druck kann auch für andere Aufgaben, z. B. für das Umschalten von hydraulischen Ventilen, für das Aktivieren von Einspritzsystemen oder dgl. genutzt werden.

Wie wir gesehen haben ist diese Anordnung gemäß Fig. 4 dazu geeignet, aus dem Kurbelgehäuse GE, wo ein niedriger Druck vorherrscht, Flüssigkeit in den Arbeitsraum 5 zu befördern und dort den Druck - falls erforderlich - bis auf über 1.000 bar zu erhöhen. Für die Ausführung einer derartigen Funktion ist nach dem Stand der Technik nur ein Hochdruck-Kolbenpumpen-System in der Lage, das zudem - mindestens bei der Hochdruckpumpe - ein Sperrflüssigkeits-Abdichtsystem benötigt.

Die erfindungsgemäß gestaltete Dichtung wirkt dagegen gleichzeitig als Pumpe. Sie erzeugt den für die Dichtung notwendigen Druck und sorgt für eine angemessene Zirkulation der Sperrflüssigkeit zu Kühlzwecken. In dem vorliegenden Anwendungsfall sorgt diese Pumpe für einen Druck im Arbeitsraum 5, der größer ist als der Druck im kalten Zylinderabschnitt ZK. Er liegt hier etwa zwischen 75 bar und 80 bar.

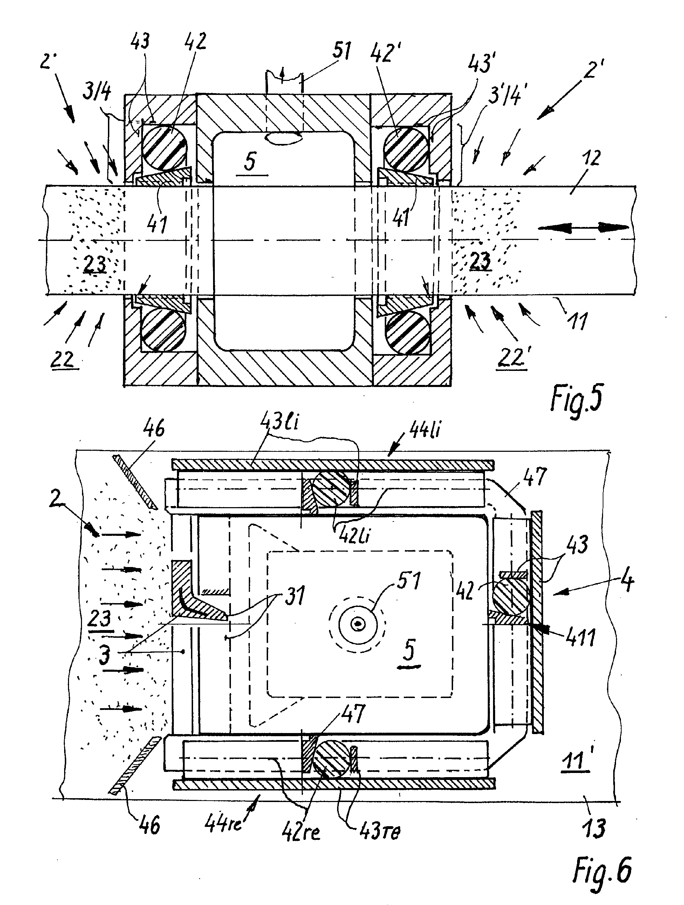

In Fig. 5 ist das Schema dieser Dichtungsanordnung in Bezug auf seine Wirkung als Pumpe nochmals in vergrößerter, schematisierter Darstellung gezeigt. Beiderseits der Pumpenanordnung, die hier gestellfest geführt ist, wird ein Flüssigkeitsnebel 22, 22' auf die Führungsfläche 11 des changierenden Adhäsionskolbens 12 bzw. auf die Kolbenstange TKS aufgetragen. Es entsteht jeweils ein Flüssigkeitsfilm 23, 23'. Bewegt sich die Kolbenstange 12 nach links, wird der Flüssigkeitsfilm 23 unter dem leicht nach links bewegten entspannten Dichtring 41' geführt und folgt dank der Grenzflächenspannung des Flüssigkeitsfilmes 23' der Kolbenstange 12 in den Arbeitsraum 5. Der Dichtring 3/4 auf der linken Seite wird in Folge der Reibung der Kolbenstange 12 und des Druckes in den Arbeitsraum 5 nach links bewegt und mit großer Kraft auf die Führungsfläche 11 des Adhäsionskolbens 12 gepresst. Dadurch wird verhindert, dass sich ein Flüssigkeitsfilm nach außen bewegt. Der Druck im Arbeitsraum 5 erhöht sich.

Bei der Bewegung nach rechts wiederholt sich der Prozess in umgekehrter Reihenfolge. Der Oelfilm oder Flüssigkeitsfilm 23 wird jetzt unter dem entlasteten Dichtring 41 in den Arbeitsraum 5 geführt und an der entgegen gesetzten Seite streift der vorgespannte Dichtring 41' die Flüssigkeit von der Kolbenoberfläche 11 ab.

Diese Vorrichtung hat den Vorteil, dass die Förderleistung erhöht wird. Wird auf einer der beiden Seiten der Dichtungsanordnung bzw. der Pumpe kein zusätzlicher Oelfilm aufgebracht, so dient diese symmetrische Anordnung der Dichtringe 3/4; 3'/4' dazu, von einer Seite die Flüssigkeit in den Arbeitsraum 5 zu fördern und auf der anderen Seite keine Ansammlungen von größeren Flüssigkeitsfilmen oder gar größeren Flüssigkeitsmengen zuzulassen.

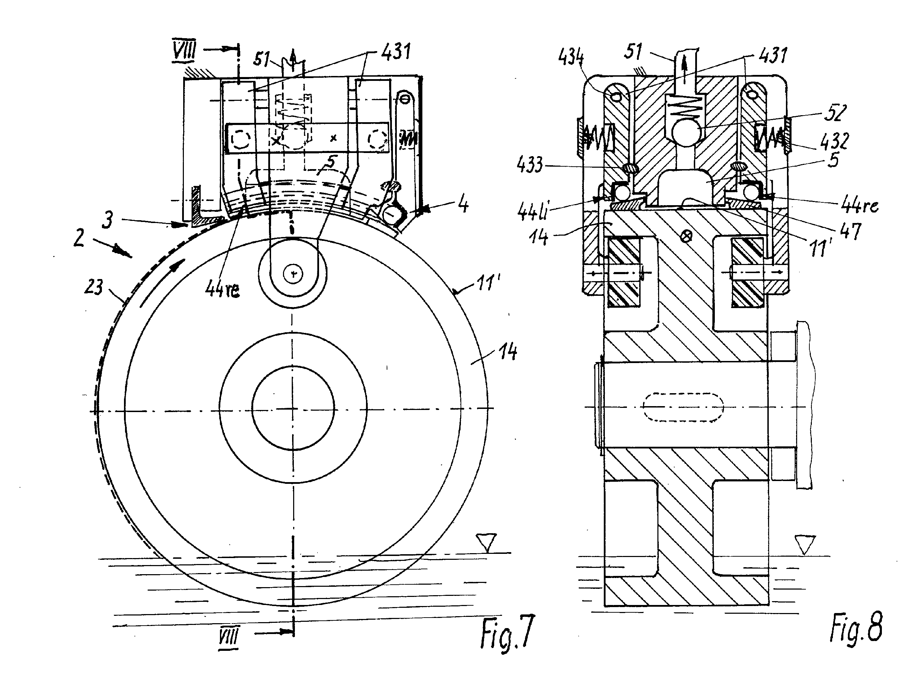

In Fig. 6 ist eine Pumpe in einer Draufsicht dargestellt, die z. B. auf der Umfangsfläche eines umlaufenden Rades 14 angeordnet sein kann, wie es in den Figuren 7 und 8 dargestellt ist. Der von links nach rechts bewegliche Adhäsionskolben 13 - hier der Umfang des Rades 14 - führt aus dem Bodenbereich des Gehäuses, wo sich ein Oelbad befindet, einen Flüssigkeitsfilm 23 nach oben (Fig.7).

Der Spaltbegrenzer 3, der hier aus einer Lippendichtung 31 besteht, drückt den Oelfilm zusammen und breitet ihn über die gesamte Breite des Arbeitsraumes gleichmäßig aus, so dass unter Druck stehende Flüssigkeit aus dem Arbeitsraum 5 nicht entgegen gesetzt zur Kolbenbewegung entweichen kann. Beiderseits des Arbeitsraumes sind seitliche Dichtungen 44 re, 44 li nach dem gleichen Prinzip angeordnet, wie sie unter Bezug auf Fig. 1 und 2 beschrieben wurden . Anstelle des Dichtringes 41 wird bei dieser Pumpenanordnung ein U-förmiges Dichtprofil 47 verwendet. Die beiden Schenkel des U (44 re; 44 li) dichten seitlich, während die Basisfläche des U als Abstreifer 4 die Abdichtung des Arbeitsraumes 5 gegen die Bewegungsrichtung des Adhäsionskolbens 13 bewirkt.

Den beiden Schenkeln des U und dem Basisabschnitt des U sind jeweils stabförmige Dichtelemente 3/4 zugeordnet. Die Belastungsstäbe 42, 42 re, 42 li werden durch stabförmige Stützwinkel 43, 43 re, 43 li elastisch gegen den Arbeitsraum 5 bewegt und sorgen damit für eine vollständige Abdichtung desselben.

Die Fig. 7 zeigt eine Pumpenanordnung gemäß Fig. 6 in einer Seitenansicht. Der Adhäsionskolben 14 dreht sich auf einer ortsfesten Achse in Uhrzeigerrichtung und fördert an seinem Umfang 11' den Flüssigkeitsfilm 23 unter dem Spaltbegrenzer 3 hindurch in den Arbeitsraum 5. Die gesamte Einheit wird hier mit einem Rollenpaar kraftschlüssig am Umfang des Rades 14 gehalten. Bei dem zu erwartenden Druck in dem Arbeitsraum 5 kann es auch sinnvoll sein, die Pumpe mit Hilfe mehrerer Rollen zu führen oder an der Achse des Rades gegen Drehung gesichert zu lagern.

Für die Belastung der Stützwinkel 43 re, 43 li sind am Gehäuse des Arbeitsraumes Tragarme 431 angelenkt. Diese stützen sich mittels Stützfedern 432 am Gehäuse des Arbeitsraumes 5 ab und bewegen die Stützwinkel 43 re, 43 li in der gewünschten Richtung.

Der Vorteil einer solchen Ausführung liegt darin, dass die Fördermengen pro Zeiteinheit ähnliche Größen erreichen, wie sie bei Zahnradpumpen üblich sind. Ein anderer Vorteil ist, dass bei einem Antrieb über gesteuerte Motoren die Fördermenge durch die Veränderung der Drehzahl des Adhäsionskolbens 14 stufenlos verändert werden kann.

Unabhängig von den hier aufgezeigten Beispielen können noch weitere Gestaltungen der Adhäsionskolben und der Dichtungssysteme realisiert werden.

So ist es bei changierenden Adhäsionskolben mit einer Kolbenlänge, die kleiner ist als die Zylinderwand, möglich, die spaltbegrenzenden Elemente und/oder den Arbeitsraum direkt am Adhäsionskolben vorzusehen, wenn die Bereitstellung des Druckmediums am Adhäsionskolben notwendig ist. Wird die Außenwand eines Zylinders im Sinn eines Adhäsionskolbens genutzt, hat man den Vorteil eines ausgedehnteren Flüssigkeitsfilmes vor dem Spaltbegrenzer. Auch dadurch wird die Fördermenge pro Zeiteinheit vergrößert.

In der Technik ist es oft notwendig, an Schlitten, die über relativ große Wege bewegt werden, Energie für die Ausführung irgendwelcher Schalt- oder Arbeitsfunktionen bereit zu stellen. Die Verwendung von Kabeln oder Schleifkontakten für die Zuführung von Energie ist oft unbefriedigend. Hier kann man durch die Bereitstellung eines Olfilmes auf einer Führungsfläche und der Anordnung einer erfindungsgemäßen Pumpe auf dem Schlitten die notwendige Energie in Form eines automatisch auffüllbaren Druckspeichers auf dem Schlitten bereitstellen.

### Bezugszeichenliste

- 1: Adhäsionskolben (allgemein)
- 11: Führungsfläche, allgemein oder rund
- 11': Führungsfläche, eben
- 12: Adhäsionskolben, (rund, changierend)
- 12': Kolbenstange (Heißgasmaschine)
- 13: Adhäsionskolben, (flach)
- 14: Adhäsionskolben, (Umfang des Kolbenrades)
- 2, 2': Zuführung für Flüssigkeit (allgemein)
- 21: Zuführung (aus Flüssigkeitsspeicher)
- 22, 22': Zuführung (über Flüssigkeitsnebel)
- 23, 23': Flüssigkeitsfilm
- 3: Spaltbegrenzer, allgemein
- 31: Lippendichtung
- 3/4, 3'/4': ringförmiges Dichtungselement (Spaltbegrenzer/Abstreifermit Doppelfunktion)
- 4: Abstreifer
- 41, 41': Dichtring
- 411: Spitze
- 42, 42', 42": Belastungsring
- 42 re, 42 li: Belastungsstab
- 43, 43': Stützwinkel
- 43 re, 43 li: Stützwinkel
- 431: Tragarme
- 432: Stützfeder
- 433: Dichtring, statisch
- 434: Schwenklager
- 44 re, 44 li: Seitendichtung
- 45: Zusatzdichtung
- 46: Einstreicher
- 47: Dichtprofil, u-förmig
- 5: Arbeitsraum
- 51: Druckrohr, Druckleitung
- 52: Druckbegrenzungsventil
- 53: Verbraucherventil
- 54: Rücklauf
- 55: Verbraucherleitung
- Z1 ... Z4: Zylinder
- ZH: Zylinderabschnitt, heiß
- ZK: Zylinderabschnitt, kalt
- ZB: Zylinderboden
- TK: Tauchkolben
- TKS: Kolbenstange
- TKK: Kreuzkopf
- H: Heizanordnung
- K: Kühler
- R: Regenerator
- E: Kurbelwelle
- GE: Gehäuse für Kurbelwelle / Kurbelgehäuse
- W: Kondenswasserablass

## Patentansprüche

1. Pumpe für Flüssigkeiten
mit einem entlang einer Führung eines Gehäuses beweglichem Kolben mit Führungsfläche (11),
mit einer Zuführung (2) für die zu fördernde Flüssigkeit und
mit einem Arbeitsraum (5), der mit einem Druckrohr (51) und einem Druckbegrenzungsventil (52) verbunden ist,
**dadurch gekennzeichnet**,
dass die Zuführung (2) der zu fördernden Flüssigkeit auf einem Teil der Führungsfläche (11) des beweglichen Kolbens - nachfolgend in der allgemeinen Form Adhäsionskolben (1) genannt - einen Flüssigkeitsfilm (23) ausbildend mündet,
dass der Zuführung (2) der Flüssigkeit in Bewegungsrichtung des Adhäsionskolbens (1) folgend ein, die Schichtdicke des Flüssigkeitsfilmes (23) definierender Spaltbegrenzer (3; 3/4; 3'/4') nachgeordnet ist,
dass hinter dem Spaltbegrenzer (3; 3/4; 3'/4'), angrenzend an die Führungsfläche des Adhäsionskolbens (1) der Arbeitsraum (5) mit einer Erstrekkung in Bewegungsrichtung des Adhäsionskolbens (1), mit einer Erstekkung über die Breite der wirksamen Führungsfläche (11) und einer Erstreckung senkrecht zum Flüssigkeitsfilm (23) nachgeordnet ist und
dass dem Arbeitsraum (5) in Bewegungsrichtung des Adhäsionskolbens (1) folgend ein gegen die bewegte Führungsfläche (11) des Adhäsionskolbens (1) wirksamer, den Flüssigkeitsfilm durchgreifender und dichtender Abstreifer zugeordnet ist.

2. Pumpe nach Anspruch 1, **dadurch gekennzeichnet,**
dass über die Zuführung (2) ein Oelnebel (22) aus der zu fördernden Flüssigkeit auf die Oberfläche des Adhäsionskolbens (1) geführt wird.

3. Pumpe nach Anspruch 1, **dadurch gekennzeichnet**,
dass die Zuführung der zu fördernden Flüssigkeit mit einem Flüssigkeitsspeicher verbunden ist.

4. Pumpe nach Anspruch 1, **dadurch gekennzeichnet**,
dass der Adhäsionskolben (1; 12; 12' ) einen kreisrunden Querschnitt hat,
dass die Zuführung (2) auf den äußeren oder inneren Umfang des Adhäsionskolbens (1) gerichtet ist und
dass der Spaltbegrenzer (3), der Arbeitsraum (5) und der Abstreifer (4) ringförmig ausgebildet sind und den Adhäsionskolben (1) oder dessen Führung am Gehäuse dichtend umgreifen.

5. Pumpe nach Anspruch 1 und 4, **dadurch gekennzeichnet**,
dass der Adhäsionskolben (1, 12, 12') eine changierende Hubbewegung ausführt,
dass der Spaltbegrenzer (3) und der Abstreifer (4) aus ringförmigen Dichtungselementen (3/4; 3'/4') bestehen, die aus einem elastischen, im Querschitt keilförmigen Dichtring (41) und aus einem sich axial und radial an einem Gehäuse abstützenden elastischen Belastungsring (42, 42', 42") bestehen
und
dass die Spitzen der Keile, der im Querschitt keilförmigen Dichtringe (41) der Dichtungselemente (3/4; 3'/4'), dem Arbeitsraum (5) abgewandt sind.

6. Pumpe nach Anspruch 5, **dadurch gekennzeichnet**,
dass beiden ringförmigen Dichtungselementen (3/4; 3'/4'), abgewandt vom Arbeitsraum (5) Zuführungen (2, 2'; 22, 22') für die zu fördernde Flüssigkeit zugeordnet sind und
dass jedes ringförmige Dichtungselement (3/4; 3'/4') in Abhängigkeit von der Hubrichtung des Adhäsionskolbens (1, 12, 12') entweder die Funktion des Spaltbegrenzers (3) oder die des Abstreifers (4) ausführt.

7. Pumpe nach Anspruch 1, **dadurch gekennzeichnet**,
dass der Adhäsionskolben (1; 13; 14 ) eine quer zur Bewegungsrichtung ebene Führungsfläche (11') aufweist,
dass der Adhäsionskolben (1) ausschließlich in einer Richtung bewegbar ist,
dass der Arbeitsraum (5) zur Führungsfläche (11') des Adhäsionskolbens (1; Flachkolben 13) seitlich und in dessen Bewegungsrichtung vorlaufend mittels Abstreifer (44, 44', 4) abgedichtet und gegen die Bewegungsrichtung mittels Spaltbegrenzer (3) für die Zuführung des Flüssigkeitsfilmes (23) geöffnet ist.

8. Pumpe nach Anspruch 7, **dadurch gekennzeichnet**,
dass der Abstreifer (4) und die Seitendichtungen (44,44') aus einem einstückig und U-förmig ausgebildetem Dichtprofil 47 bestehen, denen an jeder Seite Belastungselemente (42, 42', 42") und einzeln einstellbare Belastungsmittel (Stützwinkel 43, 43', 43") zugeordnet sind.

9. Pumpe nach Anspruch 7 und 8, **dadurch gekennzeichnet,**
dass der Adhäsionskolben (1) als umlaufendes Kolbenrad (14) oder als umlaufende Trommel ausgebildet ist, dessen zylindrische Mantelfläche als Führungsfläche (11') dient.

10. Pumpe nach Anspruch 7 und 8, **dadurch gekennzeichnet**,
dass der Adhäsionskolben (1) als umlaufendes Kolbenrad (14) ausgebildet ist, dessen Stirnfläche als Führungsfläche (11') dient.

11. Pumpe nach einem der Ansprüche 1 bis 6, **dadurch gekennzeichnet**,
dass die Pumpe an einer Trennwand (Zylinderboden ZB) zwischen Räumen (Zylinderabschnitt ZK, Kurbelgehäuse GE) unterschiedlichen Druckes als Dichtungsanordnung für einen die Trennwand (ZB) changierend beweglich durchgreifenden zylindrischen Körper (Kolbenstange TKS) angeordnet ist,
wobei die Kolbenstange (TKS) der Adhäsionskolben (1, 12, 12' ) ist,
wobei in mindestens einem der Räume (Kurbelgehäuse GE) die Zuführung (2; 22) für die Flüssigkeit zur Führungsfläche (11) des Adhäsionskolbens (1, 12, 12') angeordnet ist,
wobei der den Adhäsionskolben (1, 12, 12') umschließende Arbeitsraum (5) mit der unter Druck stehenden, zu fördernden Flüssigkeit Bestandteil der Dichtung ist und
wobei die Druckleitung mit ihrem Druckbegrenzungsventil (52) Bestandteil eines Kühlkreislaufes ist und schließlich als Rücklauf (54) im Raum (GE) der Zuführung (2) der Flüssigkeit mündet.

12. Pumpe nach Anspruch 11, **dadurch gekennzeichnet**,
dass in der Trennwand (Zylinderboden ZB) im Bewegungsbereich des Adhäsionskolbens (1, 12, 12' ) zwei Arbeitsräume (5) angeordnet sind, die voneinander mittels ringförmiger Dichtungselemente (z.B 3/4, 3'/4') getrennt sind und
dass in den voneinander getrennten Räumen (ZK, GE) Zuführungen (2, 2') und Druckleitungen (51) für unterschiedliche Flüssigkeiten angeordnet sind.

13. Dichtungsanordnung mit Pumpe für eine zirkulierende Sperrflüssigkeit,
wobei zum Abdichten von Führungsspalten zwischen mindestens einem changierend bewegten zylindrischen Teil (Kolbenstange 12', TKS) mit Führungsflächen (11) und einer Zwischenwand (Zylinderboden ZB) zwischen Räumen (ZK, GE) unterschiedlichen Druckes die Führungsspalten in einem begrenzten Bereich der Zwischenwand (ZB) mit der zirkulierenden Sperrfüssigkeit ausgefüllt sind,
wobei der Führungsfläche (11) des bewegten Teiles in einem der beiden Räume (GE) eine Zuführung für die zirkulierende Flüssigkeit zur Ausbildung eines Flüssigkeitsfilmes (23) auf der Führungsfläche (11) der Kolbenstange (12' TKS) zugeordnet ist,
wobei im Führungsspalt zwischen der Zuführung (2) für die Flüssigkeit und dem Ringraum (Arbeitsraum 5) ein die Dicke des Flüssigkeitsfilmes (23) definierender Spaltbegrenzer (3, 3/4) angeordnet ist,
wobei an der in Bewegungsrichtung der Kolbenstange (12'; TKS) jeweils gegenüberliegenden Seite ein in dieser Bewegungsrichtung dichtend aktivierbarer Abstreifer (4; 3'/4') für den sich dort ausbildenden Flüssigkeitsfilm vorgesehen ist und
wobei den Führungsspalten im Bereich des Arbeitsraumes (5) eine Druckleitung (51) mit einem Druckbegrenzungsventil (52) zur Rückführung der Flüssigkeit in den Raum (Kurbelgehäuse GE) mit der Zuführung (2, 22) zugeordnet ist.

14. Dichtungsanordnung nach Anspruch 13, **dadurch gekennzeichnet**,
dass der Raum mit der Zuführung (2) der zirkulierenden Sperrflüssigkeit das Kurbelgehäuse (GE) mit dem Kurbelgetriebe für die Kolbenstange (TKS) ist und
dass die zirkulierende Flüssigkeit ein Schmieroel ist.

15. Dichtungsanordnung nach Anspruch 13, **dadurch gekennzeichnet**,
dass der Raum mit der Zuführung (2) der zirkulierenden Sperrflüssigkeit das Kurbelgehäuse (GE) mit dem Kurbelgetriebe für die Kolbenstange (TKS) ist,
dass die zirkulierende Sperrflüssigkeit ein Schmieroel ist,
dass der zweite, durch die Zwischenwand (ZB) begrenzte Raum der kalte Zylinderraum (ZK) einer Heißgasmaschine ist und
dass der mittels Druckbegrenzungsventil (52) einstellbare Druck des zirkulierenden Schmieroeles in der Druckleitung (51) größer ist als der maximale Druck in dem kalten Zylinderraum (ZK) der Heißgasmaschine.
